# EUROPÄISCHE PATENTSCHRIFT

(11) **EP 2 110 278 B1**
(45) Veröffentlichungstag und Bekanntmachung des Hinweises auf die Patenterteilung: **19.06.2013**
(21) Anmeldenummer: 09004433.0
(22) Anmeldetag: 27.03.2009
(51) Int. Cl.: B60J 7/12, B60J 7/14

(54) **Bewegliches Dachteil in einem Fahrzeugdach**
Moveable roof component in the roof of a vehicle
Composant de toit mobile dans un toit de véhicule

(30) Priorität: 15.04.2008 DE 102008019058
(43) Veröffentlichungstag der Anmeldung: 21.10.2009
(73) Patentinhaber: Magna Car Top Systems GmbH, 74321 Bietigheim-Bissingen (DE)
(72) Erfinder: Bruder, Gernot, Dr.-Ing, 76131 Karlsruhe (DE); Papendorf, Marcus, Dipl.-Ing. (BA), 74357 Bönnigheim (DE)
(74) Vertreter: Völger, Silke Beatrix

(56) Entgegenhaltungen:
- EP-A1- 1 398 195
- EP-A2- 1 852 291
- WO-A1-03/047896
- DE-A1- 10 205 342
- DE-A1- 10 240 759
- DE-B3-102004 059 793
- FR-A1- 2 851 509

## Beschreibung

Die Erfindung bezieht sich auf ein bewegliches Dachteil in einem Fahrzeugdach nach dem Oberbegriff des Anspruches 1. Das Dokument EP 1 852 291 A2 offenbart ein Fahrzeugdach nach diesem Oberbegriff.

In der DE 101 16 094 A1 wird ein Klappverdeck für ein Fahrzeug beschrieben, das über eine Dachkinematik an die Fahrzeugkarosserie gekoppelt und zwischen einer den Fahrzeuginnenraum überdeckenden Schließposition und einer heckseitigen Ablageposition zu verstellen ist. Zur Verbesserung der Hebelverhältnisse in der Dachkinematik ist eine Vorgelegekinematik vorgesehen, die der Dachkinematik vorgeschaltet ist und über ein Stellglied betätigt wird. Diese Vorgelegekinematik sorgt in den beiden Endpositionen für ein besseres Hebelverhältnis, also in Schließposition und in Ablageposition, um das Fahrzeugdach zum einen mit einem geringeren Kraftaufwand gegen die Gewichtskraft der Dachteile aus der jeweiligen Endposition anheben zu können und zum ändern bei Annäherung an die gegenüberliegende Endposition die Dachbewegung abzubremsen, um eine langsame und stoßfreie Annäherung an die Zielendposition zu erreichen. Die Vorgelegekinematik umfasst eine Mehrzahl von Lenkern und Hebeln, was einen verhältnismäßig hohen konstruktiven Aufwand erfordert und verhältnismäßig viel Platz zum Unterbringen der Vorgelegekinematik notwendig macht.

Der Erfindung liegt die Aufgabe zugrunde, ein bewegliches Dachteil in einem Fahrzeugdach mit konstruktiv einfachen und Platz sparenden Mitteln zwischen der Schließ-und der Ablageposition zu verstellen. Es soll insbesondere der für die Verstellbewegung erforderliche Kraftaufwand reduziert werden.

Diese Aufgabe wird erfindungsgemäß mit den Merkmalen des Anspruches 1 gelöst. Die Unteransprüche geben zweckmäßige Weiterbildungen an.

Die Vorgelegekinematik des erfindungsgemäßen, beweglichen Dachteiles umfasst ein Federelement, das an einem Ende an einem schwenkbar gelagerten Dachlenker angreift und diesen mit einem um dessen Drehgelenk wirkenden Schwenkmoment beaufschlagt. Der Dachlenker wird durch das Drehmoment des Federelements in die jeweils gegenüberliegende Endposition gedrückt, wobei das Drehmoment des Federelements entgegengesetzt zu dem Drehmoment wirkt, welches aus dem Eigengewicht des Dachteiles und der Dachteilkinematik resultiert und das Dachteil in die aktuelle Endposition beaufschlagt. Demnach wirkt das Federelement dem Eigengewicht des Dachteiles entgegen, so dass auch nur ein reduzierter Kraftaufwand erforderlich ist, um das Dachteil aus der betreffenden Endposition heraus anzuheben.

Während der Überführungsbewegung zwischen Schließ- und Ablagestellung wandert die Wirklinie des Federelementes über die Position des Drehgelenks des Dachlenkers hinweg, an dem das Federelement angreift. Aufgrund des Hinwegwanderns der Wirklinie über die Position des Drehgelenks kehrt sich die Wirkrichtung um, so dass aus der anfänglich die Anhebebewegung unterstützenden Wirkung eine die weitere Überführungsbewegung abbremsende Wirkung entsteht. Zweckmäßig erfolgt der Wechsel zwischen unterstützender, anhebender und abbremsender Wirkung im Bereich des höchsten Punktes des Dachteiles, welcher etwa bei der Hälfte der Offnungs- bzw. Schließbewegung erreicht wird. Mit Überschreiten dieser maximal angehobenen Position wirkt die Gewichtskraft des Dachteiles nicht länger in die Ausgangsendposition, sondern in die zu erreichende Zielendposition, wobei die Wirkung der Federkraft die Überführungsbewegung abbremst, so dass das Dachteil seine Endposition mit reduzierter Geschwindigkeit oder sogar mit Geschwindigkeit Null erreicht. Dies hat den Vorteil, dass auf zusätzliche, die Dachteilbewegung abbremsende Maßnahmen verzichtet werden kann. Aufgrund der sehr geringen Annäherungsgeschwindigkeit an die Endposition wird ein sanftes Anschlagen in der Endstellung erreicht, wodurch erhöhte Belastungen für die beteiligten Bauteile vermieden werden.

In einer zweckmäßigen Weiterbildung ist vorgesehen, dass der Fußpunkt des Federelementes, der dem Dachlenker abgewandt ist, in Abhängigkeit von der aktuellen Dachteilposition seine Lage ändert. Dies erfolgt zweckmäßig über eine kinematische Kopplung mit der Dachteilkinematik, so dass die Stellbewegung der Dachteilkinematik automatisch auch zu einer Verstellung des Fußpunktes des Federelementes führt und keine zusätzlichen Aktuatoren erforderlich sind. Über die Verstellung des Federfußpunktes kann zusätzlich die Wirklinie des Federelementes sowie das Hebelverhältnis beeinflusst werden, unter dem das Federelement auf den Dachlenker wirkt. Beide Effekte zusammengenommen, also die Winkeländerung der Wirklinie des Federelementes sowie die Positionsänderung des Fußpunktes, können zur gewünschten, positiven Beeinflussung zur Reduzierung der Anhebekraft aus jeder Endposition sowie zur Abbremsung bei Annäherung an die gegenüberliegende Endposition ausgenutzt werden.

Gemäß einer weiteren vorteilhaften Ausführung ist der Federfußpunkt an einem Federhebel gehalten, der schwenkbar an der Fahrzeugkarosserie gelagert ist und mit einem Bauteil der Dachkinematik gekoppelt ist, insbesondere mit einem zweiten Dachlenker, der gemeinsam mit dem ersten, vom Federelement beaufschlagten Dachlenker eine Viergelenkkinematik zur Verstellung des Dachteiles bildet. Grundsätzlich können im Rahmen der Erfindung aber auch hiervon abweichende Dachteilkinematiken eingesetzt werden, insbesondere diverse Mehrgelenkkinematiken, beispielsweise Siebengelenkkinematiken. Die Ausführung des schwenkbar gelagerten Federhebels, an dem der Federfußpunkt angreift, hat den Vorteil einer verhältnismäßig einfachen konstruktiven Gestaltung, bei der die Schwenkbewegung des Federhebels für die Änderung der Wirklinie des Federelementes sowie die Positionsänderung des Federfußpunktes ausgenutzt werden kann. Insbesondere unterstützt die Bewegung des Federfußpunktes auch das Hinwegwandern der Wirklinie über das Drehgelenk des Dachlenkers, an dem das Federelement angreift.

In einer vorteilhaften weiteren Ausführung ist vorgesehen, dass die Wirklinie des Federelements beim Überführen des Dachteils zwischen Schließ- und Ablagestellung auch über die Position des Drehgelenks des Federhebels hinwegwandert, an dem der Federfußpunkt gehalten ist. Zweckmäßig wandert die Wirklinie des Federelementes zumindest annähernd gleichzeitig über die Position des Drehgelenks des Federhebels und auch über die Position des Drehgelenks des Dachlenkers hinweg. Bis zum Erreichen der Position des Drehgelenks des Federhebels stützt sich der Federfußpunkt über den Federhebel am zweiten Dachlenker ab, so dass nicht nur der erste Dachlenker sondern zusätzlich auch der zweite Dachlenker von dem Federelement in Richtung der gegenüberliegenden Endposition kraftbeaufschlagt wird. Das Überschreiten des Drehgelenks des Federhebels bewirkt eine Umkehrung der Wirkrichtung auch an dem zweiten Dachlenker der Dachteilkinematik. Da gleichzeitig auch die Position des Drehgelenks des ersten Dachlenkers überschritten wird, kehrt sich auch bezüglich dieses ersten Dachlenkers die Wirkrichtung des Federelementes um, so dass die anfänglich unterstützende Wirkung des Federelementes in beiden Dachlenkern nunmehr in eine abbremsende Wirkung in beiden Dachlenkern umgekehrt wird. Das Überschreiten der Wirklinie in den beiden Drehgelenken erfolgt zweckmäßig mit Erreichen der maximal angehobenen Dachteilposition.

Die unterstützende Wirkung aus der Endposition heraus gilt sowohl für die Schließposition des Dachteiles als auch für die Ablageposition. Auch kehrt sich die Wirkung des Federelementes bei beiden Dachteilbewegungen mit Erreichen der maximal angehobenen Dachteilposition um, also sowohl bei der Überführung von der geschlossenen Dachteilstellung in die Ablageposition als auch umgekehrt.

Ebenso ist es möglich, dass die Anordnung der Drehgelenke der Lenker und des Federhebels so gewählt werden, dass die Wirklinie des Federelements beim Öffnen oder beim Schließen des Fahrzeugdachs zwischen diesen Drehgelenken hin- und herwandern kann. Ein Überschreiten dieser Drehgelenke findet nicht statt. Diese Ausführung ermöglicht es eine besonders platzsparende Anordnung aller Bauteile zu erreichen.

Das Federelement steht zweckmäßig in jeder Endposition unter Vorspannung, um die erforderliche, unterstützende Wirkung erzielen zu können. Zweckmäßig ist das Federelement als Druckfeder ausgeführt, wobei im Rahmen der Erfindung grundsätzlich auch eine Ausführung als Zugfeder in Betracht kommt.

Die Vorgelegekinematik mit dem Federelement dient dazu, das Dach in allen seinen Positionen möglichst im Bereich des statischen Gleichgewichts oder mit nur geringer Abweichung hiervon zu halten, so dass dem Aktuator zur Verstellung des Daches primär nur die Aufgabe zukommt, das Fahrzeugdach gegen Reibungskräfte und Trägheitskräfte zu verstellen, nicht jedoch das Dach zu halten, so dass entsprechend kleiner dimensionierte Aktuatoren zum Einsatz kommen können. Der gleiche Vorteil kommt auch zum Tragen, wenn das Dach manuell verstellt werden soll; da keine bzw. nur stark reduzierte Anhebe- und Abbremskräfte erforderlich sind, ist eine manuelle Verstellung trotz eines verhältnismäßig hohen Eigengewichtes des Fahrzeugdaches möglich.

Die Kombination der beiden Federwirkungen des Federelementes - also die Kraft des Federelementes im Koppelpunkt zum schwenkbar gelagerten Dachlenker einerseits und die Reaktionskraft im Federfußpunkt andererseits, die über weitere Hebel und Lenker auf den zweiten Dachlenker übertragen wird - führt zu einer Minimierung des höchsten, über den gesamten Bewegungsablauf betrachteten Antriebsmomentenbetrages. Momentenspitzen des Öffnungs- bzw. Schließvorganges des Fahrzeugdaches können vermieden werden. Zwar kann in einzelnen Dachpositionen während der Überführung zwischen Ablage- und Schließposition die Feder in ihren Koppel- und Fußpunkten auf die beteiligten Lenker gegensätzliche Wirkungen haben. Eine starke Wirkung der Feder auf einen Dachlenker kann durch eine gegensätzliche Wirkung auf den anderen Dachlenker wieder ausgeglichen werden. Durch die geeignete Wahl der Koppelpunkte und Geometrien steuert die Dachbewegung selbsttätig die unterstützende Wirkung des Federelementes.

Eine weitere vorteilhafte Ausgestaltung besteht darin, dass die Dachteilkinematik, die Vorgelegekinematik mit dem Federelement auf einem zusätzlichen Trägerelement angeordnet sind. Hierbei sind die Drehgelenke als ein Teil des Trägerelements ausgebildet, die die Lenker der Dachteilkinematik aufnehmen. Ebenso ist die Lagerung des Federhebels als Teil des Trägerelements ausgestaltet. Das zwischen einem Lenker der Dachteilkinematik und des Federhebels eingebaute Federelement kann als Druckfeder oder auch als Zugfeder ausgelegt sein. Eine wie zuvor bereits beschriebene Umkehr der Kraftwirkung (Zug- auf Druckkraft) des Federelements muss nicht zwingend stattfinden, da der Gewichtsausgleich bei sich öffnendem oder schließenden Fahrzeugdach von der Anlenkung und somit von der Übersetzung zwischen den Drehgelenken der Lenker und des Federhebels abhängig ist. Das heißt, dass die beim Öffnen den Öffnungsvorgang unterstützend wirkende Federkraft auf beispielsweise den hinteren Lenker bei geöffnetem Fahrzeugdach einen weitaus geringeren Einfluss ausüben kann als bei Beginn des Öffnungsvorgangs.

Ebenso verhält es sich beispielsweise mit einem vorderen Lenker, der über eine lenkerfeste Anlenkung mittels einer Koppel an einem Federhebel schwenkbar angebracht ist. Hier wirkt beim Öffnen des Fahrzeugdachs das Federelement ebenfalls als Druckfeder und bewirkt über den Federhebel eine Unterstützung des Öffnungsprozesses des vorderen Lenkers. Bei Überschreitung der Umkehrbewegung des vorderen Lenkers kehrt sich die öffnende Kraft in eine abbremsende Kraft um. Die Federwirkung als Druckkraft bleibt jedoch weiter bestehen, wobei nun eine Unterstützung des vorderen Lenkers während der Endphase des Öffnungsvorgangs des Fahrzeugverdecks erfolgt.

Weitere Vorteile und zweckmäßige Ausführungen sind den weiteren Ansprüchen, der Figurenbeschreibung und den Ansprüchen zu entnehmen.

Es zeigen:
- Fig. 1: eine perspektivische Ansicht auf ein zweiteiliges Hardtop-Fahrzeugdach, dargestellt in der Schließposition,
- Fig. 2: eine schematische Ansicht eines Dachteiles des Fahrzeugdaches, dargestellt in der Schließposition, mit eingezeichneter Dachteilkinematik sowie einer Vorgelegekinematik, die ein Federelement, einen Federhebel sowie einen Koppelhebel zur Dachteilkinematik umfasst,
- Fig. 3: eine Fig. 2 entsprechende Darstellung, jedoch in einer Zwischenposition kurz vor dem Erreichen der maximal angehobenen Position während der Überführungsbewegung von der Schließ- in die Ablagestellung,
- Fig. 4: das Dachteil in seiner maximal angehobenen Position, etwa in der Mitte der Überführungsbewegung,
- Fig. 5: das Dachteil in einer weiter fortgeschrittenen Position kurz vor Erreichen der Ablagestellung,
- Fig. 6: das Dachteil in der Ablagestellung,
- Fig. 7: ein Diagramm mit dem Verlauf des Antriebsmoments eines das Fahrzeug verstellenden Aktuators, dargestellt für das erfindungsgemäße Fahrzeugdach (durchgezogene Linie) und für aus dem Stand der Technik bekannte Fahrzeugdächer (gestrichelte Linie),
- Fig. 8 bis 11: ein verstellbares Dachteil mit einer Vorgelegekinematik in einer alternativen Ausführung, bei der das Federelement als Zugfeder ausgebildet ist, dargestellt in verschiedenen Phasen bei der Überführung zwischen der Schließposition (Fig. 8) und der Ablageposition (Fig. 11),
- Fig. 12 bis 15: eine schematische Ansicht eines Dachteiles des Fahrzeugdaches in alternativer Ausführung, dargestellt von Beginn des öffnenden Fahrzeugdachs bis vollständig abgelegten Fahrzeugdach, mit eingezeichneter Dachteilkinematik sowie einer Vorgelegekinematik, die ein Druck-Federelement, einen Federhebel sowie einen Koppelhebel zur Dachteilkinematik umfasst, auf einem Trägerelement angeordnet,
- Fig. 16 bis 19: eine schematische Ansicht eines Dachteils des Fahrzeugdachs entsprechend den Figuren 12 bis 15, jedoch mit einem Zug-Federelement versehen.

In den Figuren sind gleiche Bauteile mit gleichen Bezugszeichen versehen.

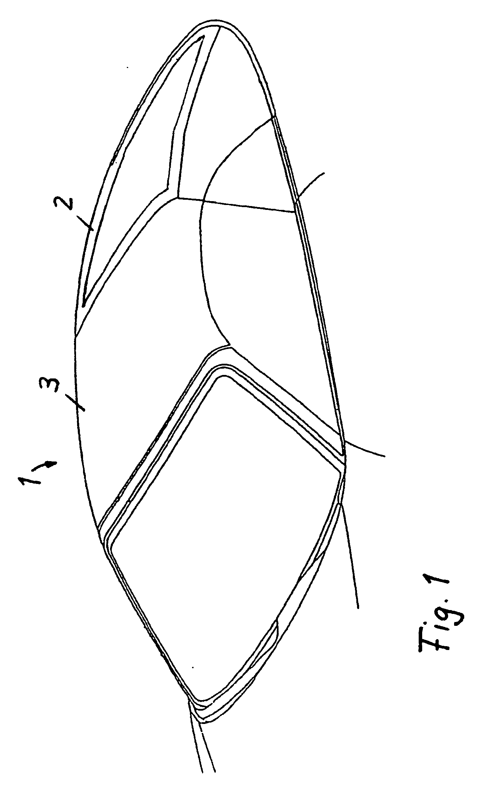

Bei dem in Fig. 1 dargestellten, zwischen der gezeigten Schließposition und der Ablageposition verstellbaren Fahrzeugdach 1 handelt es sich beispielhaft um ein zweiteiliges Hardtop mit einem vorderen Dachteil 3 und einem hinteren Dachteil 2, wobei beide Dachteile in der Ablage- bzw. Öffnungsposition in einem heckseitigen Verdeckkasten abgelegt sind und um mindestens einen karosseriefesten Drehpunkt verschwenkbar sind. Grundsätzlich kommt im Rahmen der Erfindung aber auch eine Anwendung bei Softtops mit einem Verdeckbezugsstoff und einem Verdeckgestänge in Betracht oder auch in drei- oder mehrteiligen Dächern mit mindestens einem karosseriefesten Drehpunkt.

In der Schließposition erstreckt sich das Fahrzeugdach 1 zwischen einem vorderen Windschutzscheibenrahmen und einem Heckdeckel, der zugleich den Verdeckkasten zur Aufnahme der Dachteile überdeckt. Zum Öffnen des Fahrzeugdaches wird die Dachkinematik betätigt, wodurch die beiden Dachteile 2 und 3 aus der geschlossenen Position angehoben und nach hinten in den Verdeckkasten hinein verschwenkt werden. Hierbei ändert sich die Relativposition zwischen den Dachteilen 2 und 3 sowie die Relativposition gegenüber der Fahrzeugkarosserie. Während der Überführungsbewegung zwischen Schließ- und Ablageposition durchlaufen die Dachteile 2 und 3 eine Zwischenposition, in der der Schwerpunkt der Dachteile maximal angehoben ist. Bis zum Erreichen dieser Zwischenposition muss über einen Aktuator eine Stellkraft aufgebracht werden, die dem Eigengewicht der Dachteile entgegenwirkt, welches die Dachteile in die Ausgangsposition beaufschlagt. Mit dem Überschreiten der maximal angehobenen Position wirkt das Eigengewicht der Dachteile (und der Dachkinematik) in die gegenüberliegende Endposition; der Aktuator hat dann die Aufgabe, die Dachbewegung so zu steuern, dass die Endposition mit nur sehr geringer Geschwindigkeit bzw. mit Geschwindigkeit Null erreicht wird, wofür der Aktuator gegen das Eigengewicht der Dachteile wirken muss und nunmehr eine bremsende Funktion hat.

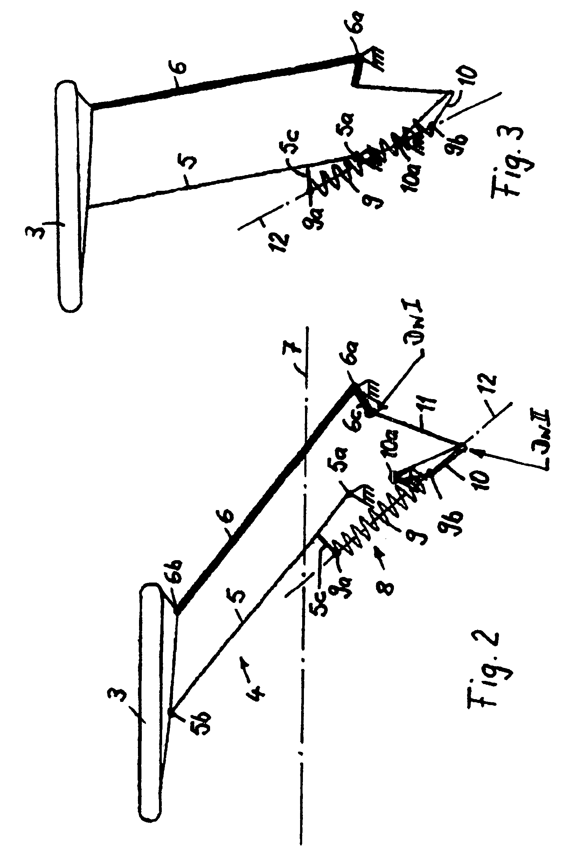

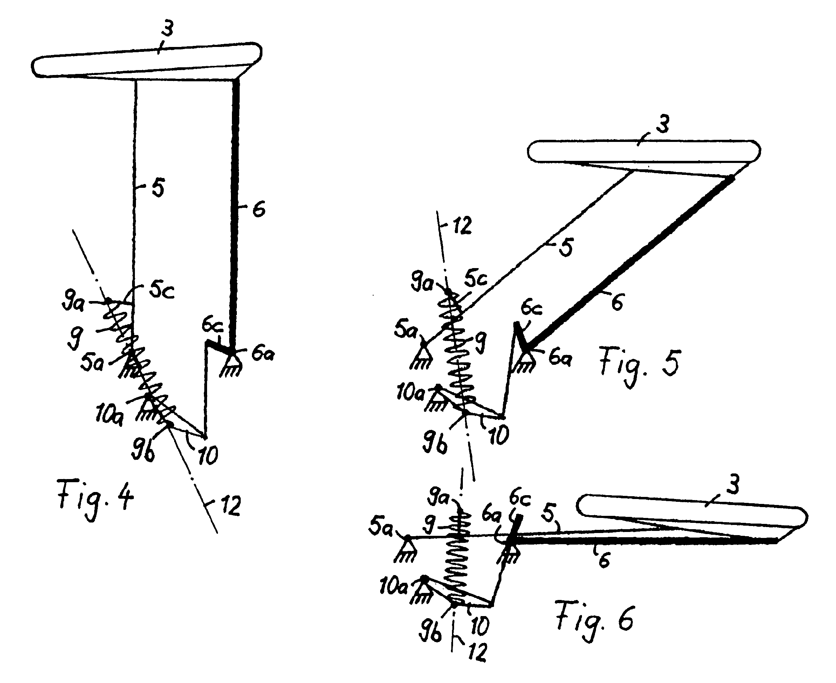

In den Figuren 2 bis 6 ist exemplarisch das vordere Dachteil 3 in verschiedenen Phasen zwischen der Schließposition (Fig. 2) und der Ablageposition (Fig. 6) dargestellt. Das Dachteil 3 ist über eine Dachteilkinematik 4 verstellbar an die Fahrzeugkarosserie 7 gekoppelt, wobei die Dachteilkinematik 4 als Viergelenkkinematik ausgebildet ist und einen vorderen Dachlenker 5 und einen hinteren Dachlenker 6 umfasst. Der vordere Dachlenker 5 weist einenends ein karosserieseitiges Drehgelenk 5a auf und ist anderenends über ein weiteres Drehgelenk 5b schwenkbar mit dem Dachteil 3 gekoppelt. In analoger Weise ist der zweite, parallel verlaufende hintere Dachlenker 6 über ein Drehgelenk 6a schwenkbar an die Fahrzeugkarosserie 7 und ein gegenüberliegendes weiters Drehgelenk 6b schwenkbar mit dem Dachteil 3 gekoppelt.

Des Weiteren ist eine Vorgelegekinematik 8 vorgesehen, die der Dachteilkinematik 4 kinematisch vorgeschaltet ist. Die Vorgelegekinematik 8 umfasst ein Federelement 9, das im Ausführungsbeispiel als Druckfeder ausgeführt ist, einen Federhebel 10 sowie einen Koppellenker 11, über den der Federhebel kinematisch an den hinteren Dachlenker 6 gekoppelt ist. Das Federelement 9 weist einen oberen Angriffspunkt 9a auf, der an einem Fortsatz 5c des vorderen Dachlenkers 5 mit Abstand zu dessen karosserieseitigem Drehgelenk 5a angebunden ist. Dem Angriffspunkt 9a gegenüber liegt der Federfußpunkt 9b, über den das Federelement 9 an den Federhebel 10 angebunden ist. Dieser Federhebel 10 ist über ein Drehgelenk 10a, welches zum Federfußpunkt 9b beabstandet ist, schwenkbar an die Fahrzeugkarosserie 7 gekoppelt. Über ein weiteres Drehgelenk, welches sowohl zum Federfußpunkt 9b als auch zum karosserieseitigen Drehgelenk 10a beabstandet ist, greift der Koppellenker 11 am Federhebel 10 an, wobei der Koppellenker 11 anderenends über noch ein weiteres Drehgelenk schwenkbar an einem Fortsatz 6c angebunden ist, der fester Bestandteil des hinteren Dachlenkers 6 ist und von dessen karosserieseitigem Drehgelenk 6a verzweigt. Das Drehgelenk zwischen Koppellenker 11 und Fortsatz 6c liegt auf Abstand zum karosserieseitigen Drehgelenk 6a des hinteren Dachlenkers. Der Federfußpunkt 9b und das Drehgelenk zwischen dem Federhebel 10 und dem Koppellenker 11 können in einer alternativen Ausführung auch zusammenfallen.

In der Schließposition des Dachteiles 3 befindet sich die Wirklinie 12 des Federelementes 9, die durch den Angriffspunkt 9a und den Federfußpunkt 9b verläuft, auf der bezogen auf die Ansicht nach Fig. 2 linken Seite sowohl des karosserieseitigen Drehgelenks 5a des ersten Dachlenkers 5 als auch des karosserieseitigen Drehgelenks 10a des Federhebels 10. Das Federelement 9 steht in jeder Endposition unter Vorspannung, so dass aufgrund des Abstandes zwischen dem Federangriffspunkt 9a und dem Fortsatz 5c am ersten Dachlenker 5 zum karosserieseitigen Drehgelenk 5a ein öffnendes Moment (in der Ansicht nach Fig. 2 im Uhrzeigersinn) um dieses karosserieseitige Drehgelenk 5a des Dachlenkers 5 erzeugt wird. Zugleich bewirkt die Reaktionskraft, die über den Federfußpunkt 9b in den Federhebel 10 eingeleitet wird, ein Drehmoment um das karosserieseitige Drehgelenk 10a des Federhebels im Gegenuhrzeigersinn, was über den Koppellenker 11 eine Drehbewegung des hinteren Dachlenkers 6 um das karosserieseitige Drehgelenk 6a im Uhrzeigersinn zur Folge hat, also in gleicher Richtung wie das Drehmoment um das karosserieseitige Drehgelenk 5a des ersten Dachlenkers 5. Das Federelement 9 bewirkt somit in der Schließposition des Dachteiles 3 sowohl ein öffnendes Moment um das Drehgelenk 5a des ersten Dachlenkers 5 als auch ein öffnendes Moment um das Drehgelenk 6a des zweiten Dachlenkers 6. Hierdurch werden die Stellkräfte, die vom Aktuator aufgebracht werden müssen, minimiert.

In Fig. 3 ist das Dachteil 3 in einer Zwischenposition während der Überführungsbewegung von der Schließ- in die Ablageposition kurz vor Erreichen der maximal angehobenen Position dargestellt. Die Wirklinie 12 des Federelementes 9 befindet sich noch diesseits der Position der karosserieseitigen Drehgelenke 5a des vorderen Dachlenkers 5 sowie 10a des Federhebels 10, so dass die Wirkrichtung des Federelementes 9 noch die gleiche ist wie in der Ausgangsposition gemäß Fig. 2 und das Dachteil 3 weiter in Richtung der gegenüberliegenden Endposition - der Ablageposition - kraftbeaufschlagt wird. Die von der Feder erzeugte Kraft ist jedoch geringer, da sich die Feder gedehnt hat. Außerdem ist der wirksame Hebelarm kleiner, so dass die Federwirkung sich entsprechend des Lastmoments verhält - in diesem Fall minimiert ist, da sich das Dach nahe seiner statischen Gleichgewichtslage befindet.

In Fig. 4 ist die maximal angehobene Position während der Überführungsbewegung zwischen Schließ- und Ablageposition erreicht. In dieser maximal angehobenen Position läuft die Wirklinie 12 durch die Achsen der karosserieseitigen Drehgelenke 5a des vorderen Dachlenkers 5 sowie 10a des Federhebels 10. Aufgrund dieser Tatsache kann das Federelement 9 trotz der noch wirkenden Spannung im Federelement kein resultierendes Drehmoment um die genannten karosserieseitigen Drehgelenke 5a und 10a erzeugen. Da in dieser maximal angehobenen Position sich aber das Dachteil sowie die Dachteilkinematik in einer labilen Gleichgewichtsposition befindet, muss die weitere Dachteilbewegung allein über den Aktuator erzeugt werden, welcher auf die Dachkinematik wirkt und die Verstellbewegung zwischen der Schließposition und der Ablageposition erzeugt. Aufgrund der Gleichgewichtslage des Dachteiles 3 in der maximal angehobenen Position genügen hierfür aber sehr geringe Stellkräfte bzw. - momente.

Mit dem Überschreiten der maximal angehobenen Position wirkt die Gewichtskraft in Richtung der zu erreichenden Zielendposition. In Fig. 5 ist das Dachteil 3 in einer weiter fortgeschrittenen Position dargestellt, die den Zustand etwa zwischen der maximal angehobenen Position und der Ablageposition darstellt. Die Wirklinie 12 liegt nunmehr aufgrund der weiter fortgeschrittenen Dachteilposition jenseits der karosserieseitigen Drehgelenke 5a und 10a des vorderen Dachlenkers 5 bzw. des Federhebels 10, mithin auf der gegenüberliegenden Seite im Vergleich zu den Dachteilstellungen vor dem Erreichen der maximal angehobenen Position. Somit hat sich die Wirkrichtung des Federelementes umgekehrt, so dass aus der anfänglich unterstützenden Anhebewirkung nunmehr eine bremsende Wirkung auf beide Dachlenker 5 und 6 erreicht wird, so dass von dem Aktuator geringere Bremskräfte als in einer Konfiguration ohne Federelement aufgebracht werden müssen.

In Fig. 6 ist die Ablageposition des Dachteiles 3 dargestellt. Aufgrund der Schwenkbewegung des Federhebels 10 um das karosserieseitige Drehgelenk 10a ändert sich die Richtung der Wirklinie 12 des Federelementes 9 sowohl in Bezug auf den ersten Dachlenker 5 als auch auf den zweiten Dachlenker 6 dahingehend, dass die Summe des aus beiden Wirkungen resultierenden Momentes etwa dem Lastmoment aus der Gewichtskraft entspricht. Im dargestellten Beispiel ist dabei der um das Drehgelenk 6a wirkende Hebel gleich Null. Eine andere Kombination der wirksamen Hebelarme stellt sich in der gegenüberliegenden Schließposition gemäß Fig. 2 ein mit der Wirkung, dass das resultierende Anhebemoment der vorgespannten Vorgelegekinematik zur Anhebung des Dachteils 3 aus der Schließposition sich nahe des statischen Lastmoments befindet. Dies gilt auch in allen Zwischenpositionen.

Bei einer Überführung des Dachteiles 3 in Gegenrichtung, also aus der Ablageposition in die Schließposition, gelten die gleichen Hebelverhältnisse in jeder Dachteilposition wie bei der Überführung von Schließ- in Ablagestellung. Es sind lediglich die Antriebs-und Bremsrichtungen des Aktuators vertauscht. Aufgrund des vergleichmäßigten Momentenverlaufs für das Antriebsmoment, welches zum Überführen sowohl von Schließin Ablageposition als auch umgekehrt erforderlich ist, genügen in jedem Fall verhältnismäßig geringe Antriebskräfte bzw. -momente zur Durchführung der Stellbewegung des Dachteiles.

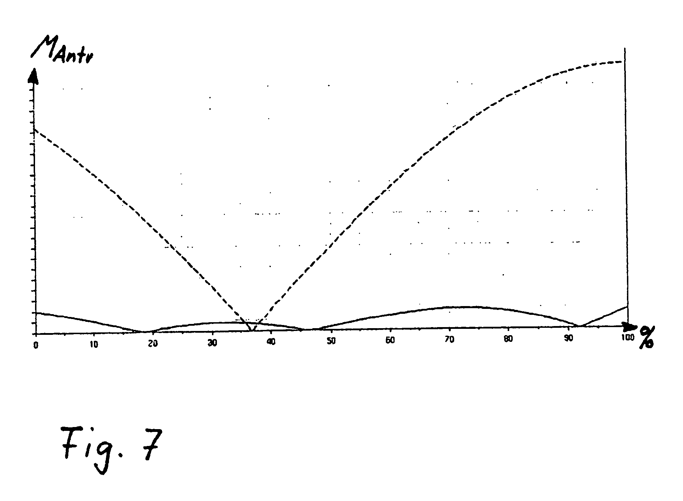

In Fig. 7 ist ein Schaubild mit dem Verlauf des Betrages des Antriebsmomentes M_{Antr} als Funktion der aktuellen Dachteilposition dargestellt, die in Prozentangaben für den Kinematikablauf bei der Überführung des Dachteiles zwischen Schließ- und Ablageposition aufgetragen ist. Dargestellt ist zum einen mit gestrichelter Linie der Antriebsmomentenverlauf für konventionelle Fahrzeugdächer, welche aus dem Stand der Technik bekannt sind. Zum andern ist der Verlauf für das erfindungsgemäße Fahrzeugdach mit durchgezogener Linie eingetragen. Wie zu erkennen, nimmt das Antriebsmoment M_{Antr} bei konventionellen Fahrzeugdächern in Schließposition (Kinematikablauf = 0 %) und in der Ablageposition (Kinematikablauf = 100 %) jeweils ein Maximum ein; zwischen diesen Maxima reduziert sich das Antriebsmoment im Scheitelpunkt der Dachbewegung auf Null. Dies bedeutet, dass in den Endstellungen des Fahrzeugdaches ein maximales Antriebsmoment gegen das Eigengewicht das Daches aufgebracht werden muss, um das Fahrzeugdach aus der Endstellung anzuheben und in Richtung der gegenüberliegenden Endstellung zu überführen.

Beim erfindungsgemäßen Fahrzeugdach, dessen Antriebsmomentenkurve mit durchgezogener Linie dargestellt ist, erhält man eine sehr flache Antriebsmomentenkurve, deren Niveau erheblich kleiner ist als dies im Stand der Technik der Fall ist. Ausgeprägte Momentenmaxima treten nicht auf, vielmehr schwankt die Kurve innerhalb eines verhältnismäßig kleinen Antriebsmomentenbereiches.

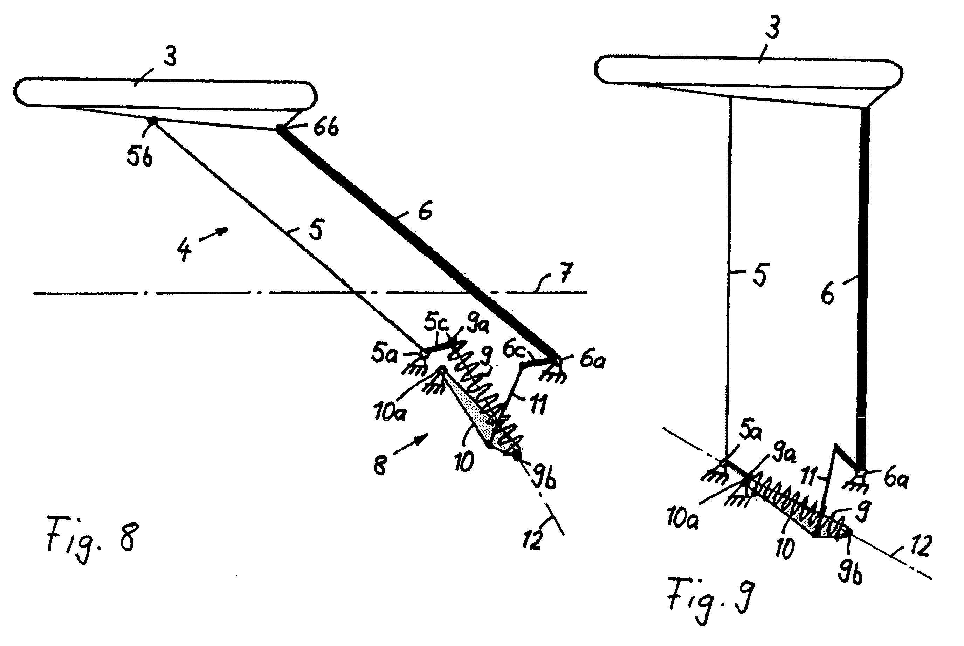

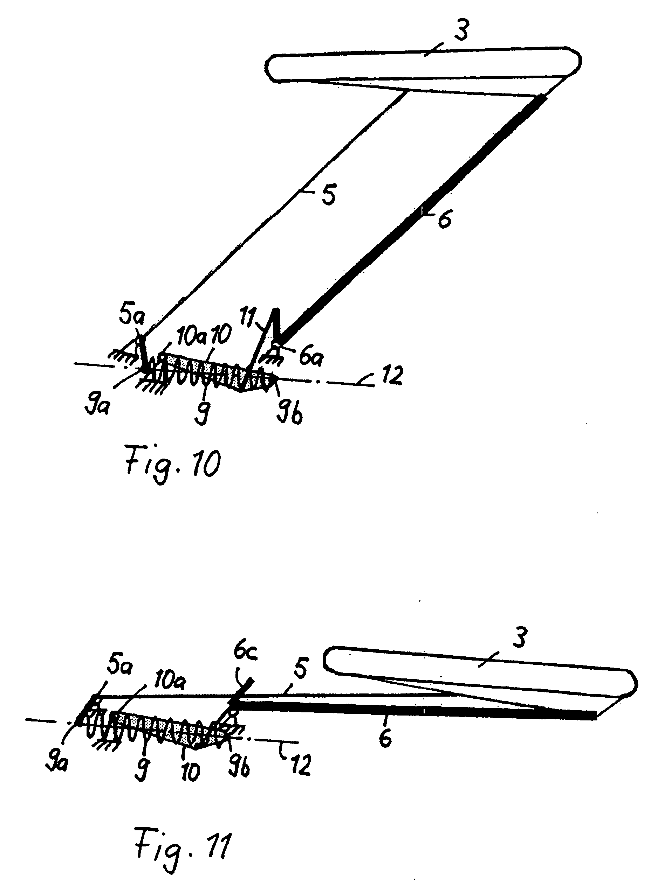

In den folgenden Figuren 8 bis 11 ist ein weiteres Ausführungsbeispiel für ein verstellbares Dachteil 3 eines Fahrzeugdaches in verschiedenen Stellungen zwischen der Schließposition (Fig. 8) und der Ablageposition (Fig. 11) dargestellt. Der kinematische Aufbau entspricht grundsätzlich demjenigen des ersten Ausführungsbeispieles, so dass insoweit auf die dortigen Erläuterungen verwiesen werden kann. Ein Unterschied besteht allerdings in der Ausführung des Federelementes 9 der Vorgelegekinematik 8, das als Zugfeder ausgeführt ist und aufgrund seiner Vorspannung in beiden Endpositionen auf seinen Angriffspunkt 9a sowie seinen Federfußpunkt 9b eine Zugkraft ausübt.

In der Schließposition nach Fig. 8 liegen die beiden karosserieseitigen Drehgelenke 5a des ersten Dachlenkers 5 und 10a des Federhebels 10, an welchem auch der Federfußpunkt 9b gelagert ist, auf der gleichen Seite der Wirklinie 12 durch das Federelement 9. In der Darstellung nach Fig. 8 wird aufgrund der Vorspannung des Federelementes 9 und des Abstandes zwischen dem Koppelpunkt 9a am Fortsatz 5c und dem karosserieseitigen Drehgelenk 5a des Dachlenkers 5 ein im Uhrzeigersinn wirkendes Drehmoment um das Gelenk 5a erzeugt, welches den Dachlenker 5 in Richtung der gegenüberliegenden Ablageposition beaufschlagt. Zugleich wird um das karosserieseitige Drehgelenk 10a des Federhebels 10 ein Moment im Gegenuhrzeigersinn erzeugt, welches aufgrund der geometrischen Anordnung der Hebel und Lenker über den Koppellenker 11 und den Fortsatz 6c in ein ebenfalls im Uhrzeigersinn wirkendes Drehmoment um das karosserieseitige Drehgelenk 6a des zweiten Dachlenkers 6 übertragen wird. Die Zugfeder 9 erzeugt somit in der Schließposition auf beide Dachlenker 5 und 6 ein Drehmoment, welches die Dachkinematik in Richtung der gegenüberliegenden Endposition beaufschlagt.

In Fig. 9 ist die maximal angehobene Dach- bzw. Scheitelposition bei der Überführungsbewegung zwischen Schließ- und Ablageposition dargestellt. Die Wirklinie 12 des Federelementes 9 schneidet näherungsweise die karosserieseitigen Drehgelenke 5a und 10a des Dachlenkers 5 bzw. des Federhebels 10, so dass die Federkraft kein bzw. ein nur geringes resultierendes Drehmoment erzeugt.

Mit weiter fortgeschrittener Dachteilposition gemäß den Figuren 10 und 11 liegen die karosserieseitigen Drehgelenke 5a und 10a im Vergleich zur Schließposition nach Fig. 8 auf der gegenüberliegenden Seite der Wirklinie 12. Dies bedeutet eine Umkehrung der Wirkrichtung des Federelementes auf die beiden Dachlenker 5 und 6, die nunmehr ein resultierendes Drehmoment in Gegenrichtung, also in Richtung der Schließposition erfahren. Hierdurch wird im weiteren Verlauf bis zum Erreichen der Ablageposition ein näherungsweise ausgeglichenes Kräfte- bzw. Momentenverhältnis erreicht, bei dem das Eigengewicht des Dachteiles bzw. der Kinematik etwa ausgeglichen wird. Im Ergebnis wird hierdurch sowohl bei der Anhebebewegung zwischen der Schließposition und der maximal angehobenen Position als auch zwischen der maximal angehobenen Position und dem Erreichen der Ablageposition ein zumindest annähernd ausgeglichenes Kräfte- und Momentenverhältnis erreicht. Gleiches gilt für die Dachbewegung in Gegenrichtung, also bei der Überführung von der Ablage- in die Schließposition.

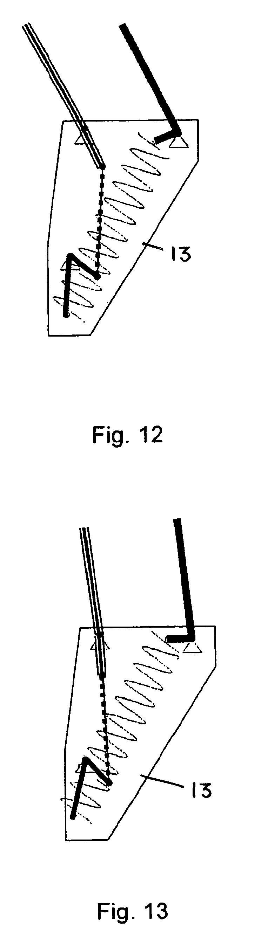

In Fig. 12 ist die Dachteilkinematik 4, in diesem Beispiel mit den Lenkern 5, 6 dargestellt, über Drehgelenke 5a, 6a an einem Trägerelement 13 schwenkbar gelagert. Ebenso ist das Drehgelenk 10a des Federhebels 10 als Teil des Trägerelements 13 ausgebildet. Der Federhebel 10 ist ein Hebel, der zwischen seinen Enden eine Lagerung aufweist und schwenkbar mit dem Drehgelenk 10a verbunden ist. Zwischen einem Fortsatz 5c des vorderen Lenkers 5 und einem Ende des Federhebels 10 ist ein Koppellenker 11 als verbindendes Bauteil eingefügt. Das andere Ende des Federhebels 10 ist gelenkig mit einem Ende des Federelements 9 verbunden, das anderen Endes über einen Fortsatz 6c auf den hinteren Dachlenker 6 wirkt.
Das Trägerelement 13 ist ähnlich einem Lenker schwenkbar am Fahrzeugaufbau 14 angebracht, wobei das Trägerelement 13 auch über ein aktives Stellelement angetrieben werden kann.

Die Feder in Fig. 12 ist als Druckfeder 9 ausgelegt und wirkt unterstützend auf den hinteren Lenker 6. Über den Federhebel 10 erzeugt die Druckkraft des Federelements 9 ein rechtsdrehendes Moment, das wiederum über den Koppellenker 11 den vorderen Lenker 5 in der öffnenden Bewegung unterstützt.

Im Umkehrpunkt zwischen sich öffnendem und schließendem Fahrzeugverdeck 1, siehe Fig. 13, wirkt keine unterstützende Kraft auf den vorderen Lenker 5, da dessen Fortsatz 5c mit dem Koppellenker 11 eine gemeinsame Strecklage einnimmt und der Federhebel 10 keine weitere Verschwenkung erfahren kann. Die gesamte Federkraft des Federelements wirkt nun auf den Fortsatz 6c des hinteren Lenkers 6, der weiterhin eine Unterstützung des Öffnungsvorgangs erfährt.

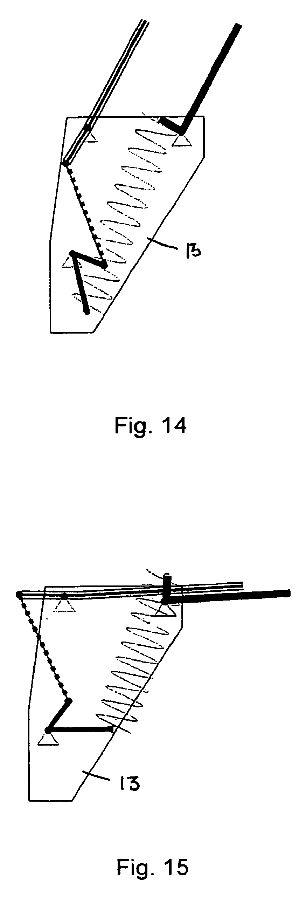

In Fig. 14 befindet sich das Fahrzeugverdeck 1 kurz vor seiner geöffneten Endlage. Der hintere Lenker 6, der durch seine Gewichtskraft in seine Endlage fallen möchte, wird nun über das Federelement 9 in dieser Bewegung gebremst. Der vordere Lenker 5 zeigt das gleiche Bestreben wie der hintere Lenker 6, wird jedoch in seiner öffnenden Bewegung durch das Federelement 9 abgebremst und in Schließstellung des Fahrzeugdachs 1 gedrückt. Es entsteht, trotz Auslegung des Federelements 9 als Druckfeder, ein Kräftegleichgewicht zwischen dem vorderen und den hinteren Lenkern 5, 6. Das Fahrzeugdach 1 befindet sich in einem ausgeglichenen Zustand der auf die Lenker 5, 6 wirkenden Kräfte.
Hier nicht abgebildet kann nun das Trägerelement 13 zusätzlich eine unterstützende in eine Richtung wirkende Kraft, beispielsweise eine Schwenkbewegung des Trägerelements 13 erfahren, wozu das Trägerelement 13 um eine Achse aktiv geschwenkt wird.

Die Fig. 15 zeigt die Dachteilkinematik 4 in vollständig geöffneter Fahrzeugdachposition. Das Federelement 9 erzeugt hierbei eine geringe, Fahrzeugdach öffnende Kraft auf den hinteren Lenker 6. Der Federhebel 10 erfährt auf die lange Hebelseite eine maximale Kraft des Federelements 9 und überträgt diese Kraft mittels des Koppellenkers 11 auf den Fortsatz 5c des vorderen Lenkers 5, der somit ein aufstellendes Moment erfährt. In dieser Position werden beide Lenker 5, 6 in Richtung zu schließendes Fahrzeugdach 1 unterstützt. Auch hier kann das Trägerelement 13 aktiv unterstützend über ein hier nicht abgebildetes Stellglied bewegt werden.

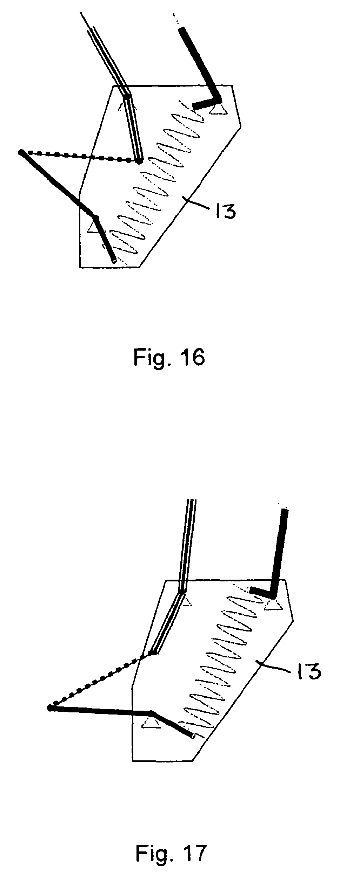

In den Figuren 16 bis 19 sind analog zu den Figuren 12 bis 15 die Dachteilkinematik 4 mit Vorgelegekinematik 8 und Federelement 9, jedoch als Zugfeder ausgelegt, dargestellt. Die Hebelübersetzungen des Fortsatzes 5c sowie des Federhebels sind entsprechend an die Zugfeder angepasst geändert.

In Fig. 16 erzeugt die Zugfeder am hinteren Lenker 6 ein linksdrehendes und am vorderen Lenker 5 ein rechtsdrehendes Moment. Beide entgegenwirkenden Momente sind durch die Übersetzungsverhältnisse der Fortsätze 5c, 6c und des Federhebels 10 so ausgelegt, dass ein Kräftegleichgewicht entsteht und die Lenker 5, 6 sich in einem Gleichgewicht befinden.

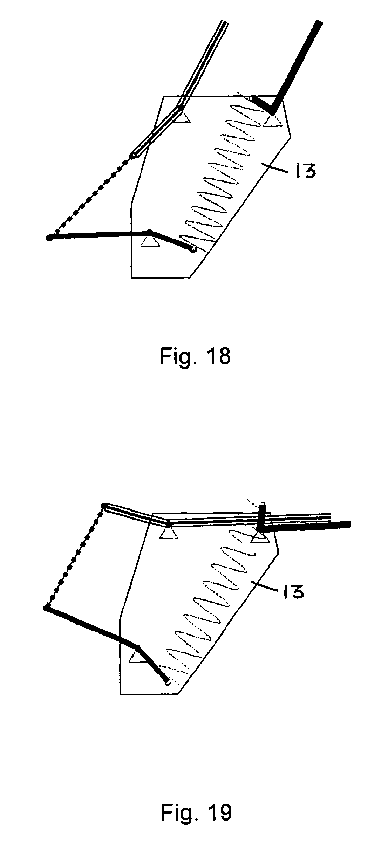

Fig. 17 zeigt die Lenker 5, 6 in einer weiter geöffneten Lage, wobei die auf die Lenker 5, 6 wirkenden Momente gleichgerichtet wie in Figur 16 wirken. In Fig. 18 sind der Fortsatz 5c und der Koppellenker 11 in gemeinsamer Strecklage und werden somit von keinem weiteren Moment beaufschlagt. Das durch die Gewichtskraft entstehende öffnende Moment am hinteren Lenker 6 wird in dieser Position durch die Zugkraft des Federelements 9 so kompensiert, dass beide Lenker 5, 6 sich in einer Gleichgewichtslage befinden.

Fig. 19 zeigt die Lenker 5, 6 in vollständig geöffneter Position. Beide Lenker werden mit einem das Fahrzeugdach schließenden Moment beaufschlagt. Dieses steht im Gleichgewicht zu den durch die Gewichtskraft der Lenker 5, 6 in Position und Gleichgewicht gehaltenen Lenkern 5, 6.

## Patentansprüche

1. Fahrzeugdach bestehend aus wenigstens zwei Dachtellen (2, 3) die mittels einer Dachteilkinematik (4) von einer Schließposition in eine Ablageposition verstellbar sind, wobei die Dachteilkinematik (4) aus wenigstens zwei Lenkern (5, 6) besteht und schwenkbar am Aufbau gelagert ist und zwischen den beiden Lenkern (5, 6) unter Zwischenschaltung einer mit der Dachteilkinematik (4) in Wirkverbindung stehenden Vorgelegekinematik (8) ein Federelement (9) wirkt, und wobei das Federelement (9) mit einem Ende schwenkbar mit einem Lenker der Dachteilkinematik (4) verbunden ist und mit dem anderen Ende schwenkbar an der Vorgelegekinematik (8) angebracht ist, wobei die Vorgelegekinematik (8) schwenkbar mit dem Aufbau und schwenkbar mit einem der Lenker verbunden ist, wobei die Vorgelegekinematik (8) aus einem Federhebel (10) und einem Koppellenker (11) besteht, und wobei das Federelement (9) an einem Ende schwenkbar mit einem Ende des Federhebels (10) und am anderen Ende schwenkbar mit einem Lenker der Dachteilkinamatik (4) verbunden ist, und wobei der Koppellenker (11) mit einem Ende am Federhebel (10) schwenkbar befestigt ist und mit seinem anderen Ende schwenkbar an einem Lenker der Dachteilkinematik (4) angebracht ist, **dadurch gekennzeichnet, dass** die Dachteilkinematik (4) und die Vorgelegekinematik (8) schwenkbar auf einem Trägerelement (13) gelagert sind, und dass das Trägerelement (13) mit dem Aufbau schwenkbar verbunden ist, oder dass das Trägerelement (13) in eine oder in mehrere der Richtungen, Fahrzeugquer-, Fahrzeuglängs- und Fahrzeughochrichtung verschiebbar am Aufbau gelagert ist.

2. Fahrzeugdach nach Anspruch 1, **dadurch gekennzeichnet, dass** das Trägerelement (13) schwenkbar mit dem Fahrzeugaufbau (14) verbunden ist und das Trägerelement (13) aktiv über ein Stellglied bewegbar ist.

3. Fahrzeugdach nach Anspruch 1, **dadurch gekennzeichnet, dass** die Wirklinie (12) des Federelements (9) während des Öffnens oder des Schließens des Fahrzeugdachs (1) maximal zwischen der trägerelementseitigen Anbindung der Lenker der Dachteilkinematik (4) und der trägerelementseitigen Anbindung des Federhebels (10) wandern kann.

## Claims

1. Vehicle roof consisting of at least two roof parts (2, 3) which are displaceable from a closed position into a storage position by means of a roof-part kinematic system (4), wherein the roof-part kinematic system (4) consists of at least two links (5, 6) and is mounted pivotably on the body, and a spring element (9) acts between the two links (5, 6) with the interconnection of a transmission kinematic system (8) which is operatively connected to the roof-part kinematic system (4), and wherein the spring element (9) is connected pivotably by one end to a link of the roof-part kinematic system (4) and is attached pivotably by the other end to the transmission kinematic system (8), wherein the transmission kinematic system (8) is connected pivotably to the body and pivotably to one of the links, wherein the transmission kinematic system (8) consists of a spring lever (10) and of a coupling link (11), and wherein the spring element (9) is connected pivotably at one end to one end of the spring lever (10) and is connected pivotably at the other end to one link of the roof-part kinematic system (4), and wherein the coupling link (11) is fastened pivotably by one end to the spring lever (10) and is attached pivotably by the other end thereof to a link of the roof-part kinematic system (4), **characterized in that** the roof-part kinematic system (4) and the transmission kinematic system (8) are mounted pivotably on a support element (13), and **in that** the support element (13) is connected pivotably to the body, or **in that** the support element (13) is mounted displaceably on the body in one or more of the directions: the vehicle transverse direction, vehicle longitudinal direction and vehicle vertical direction.

2. Vehicle roof according to Claim 1, **characterized in that** the support element (13) is connected pivotably to the vehicle body (14) and the support element (13) is actively movable via an actuating element.

3. Vehicle roof according to Claim 1, **characterized in that**, during the opening or the closing of the vehicle roof (1), the line of action (12) of the spring element (9) can migrate maximally between the support-element-side connection of the links of the roof-part kinematic system (4) and the support-element-side connection of the spring lever (10).

## Revendications

1. Toit de véhicule constitué d'au moins deux parties de toit (2, 3) qui peuvent être déplacées au moyen d'une cinématique de parties de toit (4) d'une position de fermeture dans une position de rangement, la cinématique de parties de toit (4) se composant d'au moins deux bras oscillants (5, 6) et étant supportée de manière pivotante sur la carrosserie et un élément à ressort (9) agissant entre les deux bras oscillants (5, 6) avec l'interposition d'une cinématique intermédiaire (8) en liaison fonctionnelle avec la cinématique de parties de toit (4), et l'élément à ressort (9) étant connecté de manière pivotante par une extrémité à un bras oscillant de la cinématique de parties de toit (4) et étant monté par l'autre extrémité de manière à pouvoir pivoter sur la cinématique intermédiaire (8), la cinématique intermédiaire (8) étant connectée de manière pivotante à la carrosserie et étant connectée de manière pivotante à l'un des bras oscillants, la cinématique intermédiaire (8) se composant d'un levier à ressort (10) et d'un bras oscillant d'accouplement (11), et l'élément à ressort (9) étant connecté à une extrémité de manière pivotante à une extrémité du levier à ressort (10) et à l'autre extrémité de manière pivotante à un bras oscillant de la cinématique de parties de toit (4), et le bras oscillant d'accouplement (11) étant fixé de manière pivotante par une extrémité au levier à ressort (10) et étant monté par son autre extrémité de manière pivotante sur un bras oscillant de la cinématique de parties de toit (4), **caractérisé en ce que** la cinématique de parties de toit (4) et la cinématique intermédiaire (8) sont montées de manière pivotante sur un élément support (13) et **en ce que** l'élément support (13) est connecté de manière pivotante à la carrosserie ou **en ce que** l'élément support (13) est monté sur la carrosserie de manière à pouvoir être déplacé dans une direction ou dans plusieurs des directions transversale du véhicule, longitudinale du véhicule, et verticale du véhicule.

2. Toit de véhicule selon la revendication 1, **caractérisé en ce que** l'élément support (13) est connecté de manière pivotante à la carrosserie du véhicule (14) et l'élément support (13) peut être déplacé activement par le biais d'un actionneur.

3. Toit de véhicule selon la revendication 1, **caractérisé en ce que** la ligne d'action (12) de l'élément à ressort (9) peut varier pendant l'ouverture ou la fermeture du toit de véhicule (1) au maximum entre la liaison des bras oscillants de la cinématique de parties de toit (4) du côté de l'élément support et la liaison du levier à ressort (10) du côté de l'élément support.
